# EUROPEAN PATENT APPLICATION

(11) **EP 2 336 592 A1**
(43) Date of publication of application: **22.06.2011**
(21) Application number: 09015658.9
(22) Date of filing: 18.12.2009
(51) Int. Cl.: F16D 65/00

(54) **Brake disc pack with inert gas system for aircraft**

(71) Applicant: PFW Aerospace AG, 67346 Speyer (DE)
(72) Inventor: Scott, Dennis, Taunton TA2 7UF (GB)
(74) Representative: Hörschler, Wolfram Johannes

(57) **Abstract**

The invention relates to an inert gas system (24), particularly for aircrafts (10). The inert gas system (24) comprises an inert gas reservoir (64), provided in a wing (12) or a fuselage (14), for supplying inert gas to the at least one fuel tank (16, 78). Inert gas is supplied via a piping system (26, 28) to at least one brake disc pack (36) of at least one landing gear (18). Inert gas supplied generates an oxygen reduced atmosphere at the at least one brake disc pack (36).

## Description

### Field of the invention

The invention relates to aircraft braking systems, particularly to aircraft braking systems comprising a brake disc pack of at least one brake disc. The brake discs of the brake disc pack are either made from steel withstanding very high temperatures or made from carbon fibre.

### Prior art

Braking systems for aircraft either aircrafts for passenger transport or for the transport of cargo are either made from steel or carbon-fibre nowadays. As compared to steel-made brake discs, carbon fibre-made brake discs withstand higher temperatures. For this reason nowadays the majority of aircraft brake systems, arranged at the bottom of the landing gear, composite brake discs made from carbon-fibre.

Concerning the costs of operating commercially used passenger airplane or commercially used cargo airplane the costs for fuel are of major importance, followed by the costs for tires which are subject to wear upon each landing process of the aircraft, followed by the amount of costs involved with aircraft braking systems. As outlined above, braking systems for aircraft comprise either brake discs made from steel which only can by operated until a certain temperature above which they loose their braking effect or are being made from carbon-fibre, subject to mechanical wear.

Concerning the brake systems comprising generally laterally movable brake discs made from carbon fibre, said surfaces of each of the brake discs arranged within a brake disc pack are exposed to an oxygen atmosphere. It has to be understood, that oxygen atmosphere means the ambient atmosphere, i.e. the surrounding air having a percentage of 21 % of oxygen.

On the respective surfaces of the carbon-made brake discs the presence of oxygen in the surrounding generates a layer which is eroded from said surfaces upon each landing process. This in turn has the consequence that the thickness of said carbon-made brake discs decreases gradually upon the operation of said airplane, until a minimum thickness has been reached and an exchange of the respective brake disc of the brake disc pack or the exchange of the entire brake disc pack becomes necessary.

Brake discs made from carbon fibre in commercial operation usually withstand about 2000 landings before their thickness has reached a critical value, which in turn triggers the exchange of the respective brake disc or the entire brake disc pack.

### Summary of the invention

It is one object of the present invention to provide for a brake system including a brake disc pack, the single brake discs particularly made of carbon fibre, in which the wear of the brake discs of the brake disc pack is reduced significantly.

According to the present invention an oxygen-depleted gas, or oxygen-depleted air or an inert gas is supplied to the landing gear of the aircraft, particularly to the area in which the brake disc pack or brake disc arrangement is located. This offers the advantage that an inert gas system already being present in the aircraft, particularly to supply inert gas or oxygen-depleted gas, or oxygen-depleted air to a fuel tank or a fuel tank system in the wing is used as a source of a gas creating an oxygen reduced atmosphere to be supplied to the braking system of the aircraft. In commercially used aircrafts, either passenger aircrafts or cargo aircrafts, either in one of the wings or in a compartment of the fuselage an inert gas reservoir is present. By means of this inert gas reservoir inert gas or oxygen-depleted gas, or oxygen-depleted air is provided via an inert gas wing piping system to the number of fuel tanks, commonly arranged in the interior of the wings of the aircraft.

In a very advantageous embodiment of the present invention the inert gas reservoir supplies inert gas or oxygen-depleted gas, or oxygen-depleted air via an inert gas supply line to a valve, particularly a 3-way-valve. This valve is actuated upon landing such that inert gas or oxygen-depleted gas, or oxygen-depleted air is not supplied to the fuel tanks only but as well to a piping system in the landing gear of the aircraft. The piping system, in which the inert gas, oxygen-depleted gas or oxygen-depleted air is conveyed, comprises a bypass having a throttle element which bypasses said valve particularly a 3-way-valve of the inert gas piping system. Alternatively, two one-way valves are conceivable to allow for a simultaneous supply of an oxygen-depleted gas, oxygen-depleted air or an inert gas to the fuel tanks as well as to the landing gear.

The inert gas system for supplying inert gas, oxygen-depleted gas, or oxygen-depleted air to the braking system of the aircraft can comprise at least one vertical pipe arranged within the landing gear. Said at least one vertically extending pipe extending through to the landing gear communicates with at least one horizontal pipe of the landing gear. Said horizontal pipe may be the axle of the landing gear on which the tyres of the landing gear are mounted, surrounding the brake systems of the aircraft. The vertically arranged pipe within the landing gear of the aircraft may communicate in a very advantageous embodiment with the axle in the centre thereof to supply inert gas to both sections of the axle. Said axle comprises a hollow interior which forms a duct for extending in horizontal direction for the inert gas.

On the axle a brake saddle being is mounted stationarily arranged and a number of brake discs made from carbon fibre. By means of a piston arrangement said brake disc assembly of the brake disc pack is movable in axial direction. This may include an electrical or in the alternative an hydraulically actuation of said piston arrangement for actuating the brake disc assembly.

In the deactivated stage of the braking system of the aircraft the number of brake discs of the brake disc pack is arranged so as to form annular spaces between adjacently arranged brake discs. Openings in the circumference of the axle of the landing gear are arranged such that they correspond to the annular spaces extending between the surfaces of adjacently arranged brake discs. Upon activation of the brake system according to the present invention, a flow of inert gas, or oxygen-depleted gas or oxygen-depleted air is effected by means of the piping system upon activation of the valve, inert gas or oxygen-depleted gas, or oxygen-depleted air flowing through the at least one vertically extending pipe in communication with the hollow interior of the axle and flowing into the annular spaces between said surfaces of said number of the brake disc pack. By means of this an oxygen reduced atmosphere is created in the brake disc pack, particularly in those spaces in which the surfaces of the number of brake discs contact each other upon the braking process. The layer subject to wear and created by the ambient oxygen atmosphere is reduced significantly, so that the brake disc pack or the single brake discs, respectively according to the brake system of the present invention lasts longer than 2000 landings. The reason for that is that upon elimination of the oxygen created layer on the surfaces of each of said brake discs their respective thickness will not decrease so fast as compared to the solutions according to previous solutions.

The piston arrangement for moving said braked discs laterally is either been activated electrically or hydraulically.

### Brief description of the drawings

The present invention is now described in greater detail at hand of the accompanying drawings in which:
- Figure 1: is a schematical view of an aircraft having an activated landing gear,
- Figure 2: shows parts of the inert gas system according to the present invention in the area of the brake disc pack in the landing gear,
- Figure 3: schematically shows the inert gas piping system, with a 3-way-valve,
- Figure 3.1: shows an inert gas piping system having two independent 1-way-valves,
- Figure 4: shows the interior of the axle of the landing gear with openings arranged on the circumference and
- Figure 5: shows in a schematical view the arrangement of the inert gas reservoir within the wing, the arrangement of fuel tanks and the position of the landing gear.

### Preferred embodiments

In connection with the present invention an inert gas is a gaseous medium, which is either not able to react, i.e. such as nitrogen or the reactivity of which is reduced significantly. Besides an inert gas, an oxygen-depleted gas or oxygen-depleted air can be used as well.

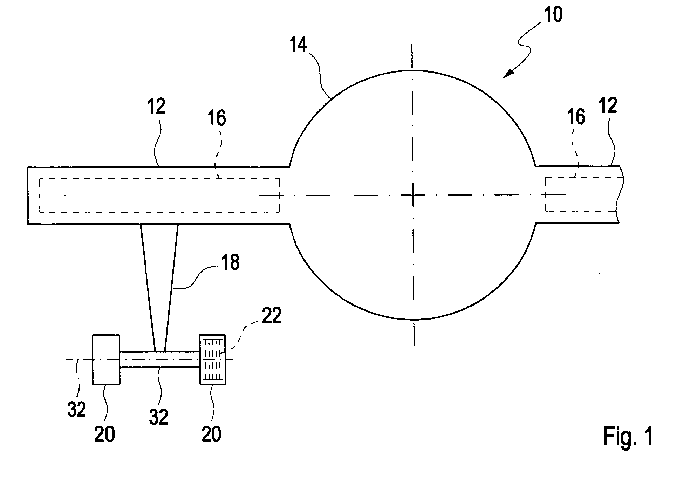

Figure 1 shows a schematical view of an aircraft either a commercially uses passenger aircraft or a commercially cargo aircraft.

An aircraft 10 comprises wings 12 which are mounted on a fuselage 14. Within the wings 12 at least one fuel tank 16 is arranged. According to figure 1 a landing gear 18 comprises an axle 32, being contacted by the landing gear 18 in the centre of thereof. To said axle 32 in general a pair of tires 20 is assigned, said tires 20 each surrounding brake discs 22. Said tires 20 are subject to wear as well as the number of brake discs 22 assigned to the landing gear 18.

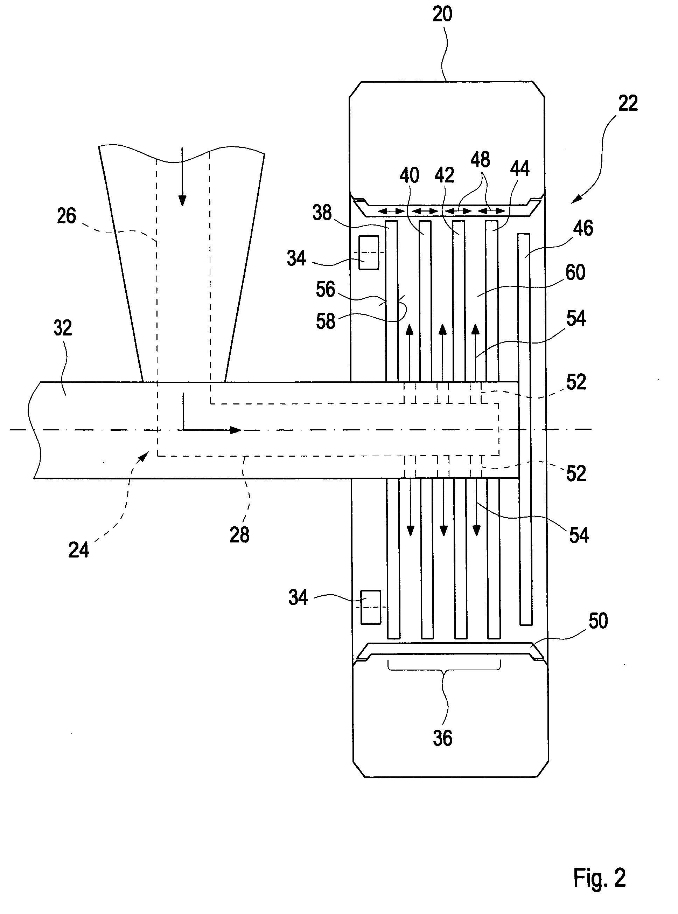

Figure 2 shows the brake discs according to figure 1 in greater detail and in a larger scale.

According to figure 2 the landing gear 18 is fixed to said axle 32 in the centre thereof. On the circumference of the axle 32 a brake disc pack 36 is arranged. The brake disc pack 36 comprises a number of single brake discs 38, 40, 42 and 44, respectively. Reference number 38 depicts a first brake disc, reference number 40 depicts a second brake disc, reference number 42 depicts a third brake disc and reference number 44 depicts a fourth brake disc. Each of said brake discs 38, 40, 42, 44 is made of carbon fibre material or comprises carbon fibre material. Further said brake disc pack 36 according to figure 2 comprises a stationarily mounted brake saddle 46. Said brake saddle 46 is mounted on the axle 32 in a stationary manner. According to figure 2 each of said discs 38, 40, 42 and 44, respectively, is movable in lateral direction as depicted by arrows labelled reference number 48. The lateral movement 48 of each of the brake discs 38, 40, 42 and 44, respectively, is affected by a piston assembly 34 being actuated electrically or hydraulically. Each of the pistons of the piston assembly 34 is mounted on a spoke-like arrangement in circumferential direction to compress the brake discs 38, 40, 42 and 44, respectively, in lateral direction as depicted by the double arrows 48, indicating the lateral movement of the brake discs 38, 40, 42 and 44, respectively.

On the circumference of a rim 50 a tire 20 is mounted.

According to the embodiment given in figure 2 the landing gear 18 comprises a vertical pipe 26 of an inert gas system 24. A at least one vertical pipe 26 is mounted within the landing gear 18. A at least one vertical pipe 26 is connected to at least two horizontal pipes 28 which extend to the horizontal direction through said axle 32 as given in figure 2. The at least one vertical pipe 26 and the horizontal pipe 28 are part of an inert gas pipe system 24 connected to an inert gas tank which is not shown in figure 1 and figure 2, respectively. Inert gas, such as nitrogen, or an oxygen-depleted gas or oxygen-depleted air is supplied by means of the at least one vertical pipe 26 to the horizontal pipe 28 imbedded in the axle 32. Through the hollow interior of said axle 32 depicted in figure 2, inert gas, or oxygen-depleted gas or oxygen-depleted air is supplied to openings 52 arranged on the circumference of the axle 32. The location - in axial direction - on said openings 52 in the circumference area of the axle 32 corresponds to annular spaces 60 between surfaces 56, 58, respectively, of adjacent brake discs 38, 40, 42, 44, respectively.

As shown in figure 2 inert gas, or oxygen-depleted gas, or oxygen-depleted air passing the at least one vertical pipe 26 within the landing gear 18 is fed to the horizontal pipe 28 arranged within the axle 32. The inert gas, or oxygen-depleted gas, or oxygen-depleted air exits the hollow interior of the axle 32 on said openings 52 in the circumference of said axle 32 and is sprayed into the annular spaces 60, see reference number 54 showing the inert gas flow or a flow of an oxygen-depleted gas or a flow of oxygen-depleted air. By the flow of either inert gas or oxygen-depleted gas, or oxygen-depleted air 54 to said surfaces 56, 58, respectively, each of said brake discs 38, 40, 42 and 44 are surrounded by an oxygen-reduced atmosphere. An oxidized layer of carbon fibre created by oxygen of the ambient atmosphere is significantly eliminated such that the thickness of each of said brake disks 38, 40, 42 and 44, respectively of said brake disc pack 36 decreases gradually over longer operating time. Rather, said surfaces 56, 58, respectively, of each of the brake discs 38, 40, 42 and 44, respectively is exposed to an oxygen reduced, i.e. nitrogen enriched atmosphere. In according to figure 2 said annular spaces 60 each are surrounded by surfaces 56, 58, respectively of adjacently mounted brake discs 38, 40, 42 and 44. Still further the annular space 60 is limited by the bottom of the rim 50 the inert gas such as nitrogen being fed via openings 52 in said axle 32 in substantially radial direction is kept within the annular spaces 60 and a oxidisation of surfaces 56, 58 of the brake discs 38, 40, 42, 44 is reduced significantly. In view of the solution according to the present invention, the number of landings to be preformed with a brake disc pack being exposed to an oxygen reduced atmosphere is increased up to 2500 to 3000 landings. The sustainability of said brake discs 38, 40, 42 and 44, respectively, is increased significantly by the implementation of the present invention.

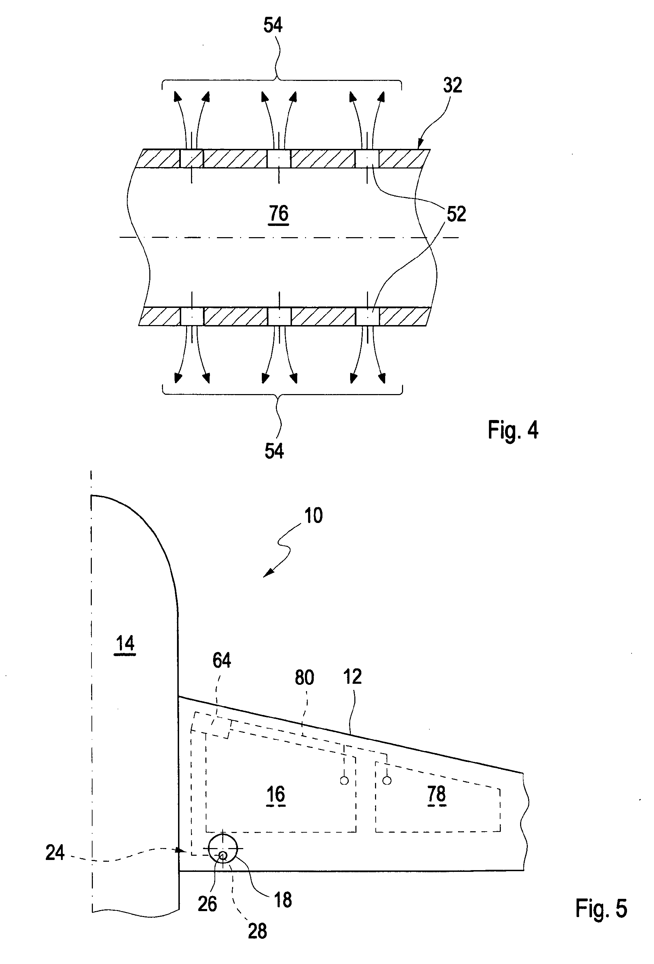

In figure 2 it is shown that the openings 52 in the axle 32 correspond to said annular spaces 60 between each of adjacently mounted brake discs 38, 40, 42, 44, respectively. As shown in figure 2, an opening 52 could be provided on the side of first surface 56 of brake the first brake disc 38. Thus, inert gas or oxygen-depleted gas, or oxygen-depleted air would be directed to the first surface 56 of the first brake disc 38 which is arranged opposite to the piston arrangement 34. Likewise an opening 52 in the axle 32 in the area between said second surface 58 of the fourth braked disc 44 facing the stationarily mounted brake saddle 46 is conceivable. In figure 2 is shown that said landing gear 18 comprises the one vertical pipe 26 which in this embodiment feeds a vertical pipe 28 or a hollow interior 76 of said axle 32 as shown in figure 4.

In the embodiment given in figure 2 the at least on vertical pipe 26 extending through the landing gear 18 just feeds one horizontal pipe 28. Given the landing gear 18 according to figure 1, the vertical pipe 26 may feed two horizontally extending pipes 28 arranged inside the axle 32 at the same time. For this purpose the vertical pipe 26 is mounted to said axle 32 of a landing gear 18 essentially in the centre thereof.

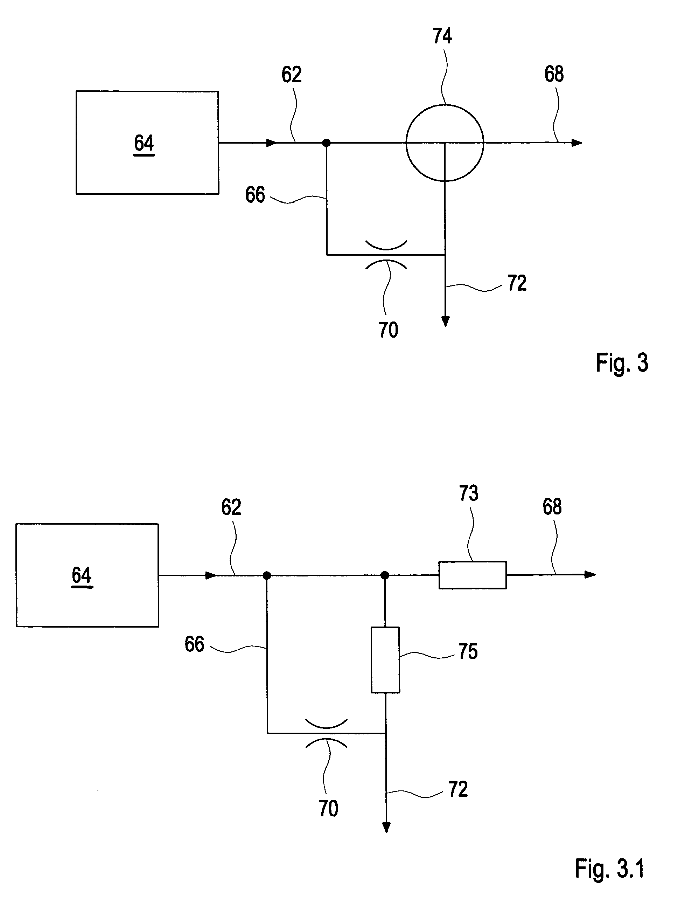

Figure 3 shows the major components of the inert gas system according to the present invention.

At least one inert gas reservoir 64 is mounted in the interior of the wings 12 of an aircraft 10 or in the interior of the fuselage 14 of said aircraft 10. Within the at least one inert gas reservoir 64 alternatively, said previously mentioned oxygen-depleted gas or oxygen-depleted air may be stored as well and supplied to the inert gas pipe system 24 accordingly.

Via an inert gas supply 62 inert gas such as nitrogen is fed to a 3-way-valve 74. A bypass 66 having a throttle element 70 is arranged in direction of the flow of inert gas or oxygen-depleted gas, or oxygen-depleted air via the entry of said 3-way-valve 74 as shown in figure 3. Said bypass 66 allows to feed inert gas or oxygen-depleted gas, or oxygen-depleted air via bypass 66 at an ambient pressure which depends on the dimensioning of the throttle 70 directly to a supply 72 extending to the brake disc pack and being fitted to said at least one vertical pipe 26 as shown in figure 2. Upon actuation of the 3-way-valve inert gas is either directed via supply 68 to at least one fuel tank 16, 78 arranged within the wings and/or to said supply 72 to the brake disc pack 36 of the landing gear 18. Via bypass 66 a constant supply of inert gas or oxygen-depleted gas, or oxygen-depleted air to the brake disc pack is visible via supply 72 to the brake disc pack as schematically shown in figure 2, being described below.

In figure 3 just one inert gas reservoir is shown, two or more inert gas reservoirs 74 may be arranged in the fuselage 14 or the wings 12 of the airplane to ensure a supply of inert gas or oxygen-depleted gas, or oxygen-depleted air to fuel tank 16, 78 and the landing gears 18, respectively.

Figure 3.1 shows an inert gas tank reservoir from which by means of an inert gas supply 62 inert gas, or oxygen-depleted gas or oxygen-reduced air is supplied to an arrangement of a first 1-way-valve 73 and a second 1-way-valve 75. The first 1-way-valve 73 is assigned to the supply 68 to the at least one fuel tank, whereas the second valve 75 is arranged within said supply 72 to the brake disc pack 36 not shown in greater details in the schematic embodiments according to figure 3 and 3.1, respectively. Instead of the 3-way-valve 74 used in the embodiment according to figure 3, figure 3.1 makes use of two independently actuatable 1-way-valves 73, 75, respectively. This allows for an simultaneously supply of an inert gas, or an oxygen-depleted gas or oxygen-depleted air to both systems, i.e. the fuel tank as well as the landing in the at least fuel tank 16 as well as to the landing gear 18.

Figure 4 shows schematically an axle of the landing gear having a hollow interior.

In a further embodiment of the present invention, a hollow interior 76 of the axle 32 may be used as horizontal pipe 28. As shown in figure 4, openings 52 are manufactured on the circumference of said axle 32 serving the purpose to supply an flow 54 of either inert gas or oxygen-depleted gas or oxygen-depleted air into the annular spaces 60 as best shown in figure 2. Said annular space 60 serve as a kind of cage and keep the inert gas or oxygen-depleted gas, or oxygen-depleted air present at the surfaces 56, 58, respectively of adjacently mounted brake discs 38, 40, 42 and 44, respectively. The solution according to figure 4 eliminates the need of horizontal pipe 28 extending through the hollow interior 76 of that axle 32 according to figures 1 and 2, respectively. Said flow 54 of inert gas, oxygen-depleted gas or oxygen-depleted air extends in radial direction and may be directed by an inclination of said openings 52 towards that surfaces 56 and 58 of the brake discs or essentially in radial direction. Thus, a constant flow 54 of inert gas, oxygen-depleted gas, or oxygen-depleted air into said annular spaces 60 as best shown in figure 2 is ensured to prevent oxidization of the surfaces 56, 58 of each of the brake discs 38, 40, 42 and 44 of the brake disc pack 36.

Figure 5 shows a top view of a wing of an aircraft and parts of its fuselage.

According to figure 5 the aircraft 10 is supplied with a wing 12 in which at least one fuel tank 16 is arranged. Within the wing 12 according to figure 5, a further fuel tank 78 may be arranged. Both fuel tanks 16 and 78, respectively, are being fed by inert gas or oxygen-depleted gas, or oxygen-depleted air via an inert gas wing piping system 80. Said inert gas piping system 80 is connected to said inert gas reservoir 64 arranged closer to the fuselage 14 and supplies inert gas or oxygen-depleted gas, or oxygen-depleted air to the fuel tank 16,78.

Said inert gas reservoir 64 arranged in the wing 12 shown in figure 5 is arranged on the left wing of the aircraft 10 - not shown in grater detail in figure 5.

Sill further, the inert gas reservoir 64 according to figure 5 does not only supply inert gas or oxygen-depleted gas, or oxygen-depleted air to the inert gas piping system 80 but also to an inert gas pipe system 24 which supplies inert gas or oxygen-depleted gas, or oxygen-depleted air to the brake disc pack 36 at the bottom of the landing gear 18. Via the inert gas pipe system 24 the inert gas reservoir 64 is connected to the at least vertical pipe 26 extending in a substantially vertical direction through said landing gear 18. It is connected either to the horizontal pipe 28 feeding inert gas or oxygen-depleted gas, or oxygen-depleted air to the brake disc pack of the tyres 20, or the hollow interior 76 of said axle 32 at the bottom of the landing gear 18 as shown in figure 4.

The inert gas pipe system 24 being fed by the inert gas reservoir 64 arranged with within the wing 12 is active on landings and is being activated simultaneously with the activation of the piston arrangement 34 to generate a lateral movement 58 of that brake discs 38, 40, 42, 44 of the brake disc pack 36.

In connection with the present invention an suitable inert gas is nitrogen however, other inert gases are suitable as well. Alternatively to an inert gas such as nitrogen, an oxygen-depleted gas or oxygen-reduced air might be used well as medium conveyed within an inert gas pipe system 24 according to the present invention. Inert gas wing piping systems 80 is connected to the fuel tank 16 and a further fuel tank 78 arranged in the wing 12, may be operated independently from the inert gas pipe system 24 as well as inert gas to the brake disc pack 36. The inert gas pipe system 24 as well as the inert gas wing piping system 80 shown in the wing 12 on the right-hand side of the fuselage 14 is arranged within the left-hand wing 12 of the aircraft 10 schematically shown in figure 5.

## Claims

1. Inert gas system (24), particularly for aircrafts (10), having at least one inert gas reservoir (64) providing an oxygen-depleted gas wherein said oxygen-depleted gas is fed to at least one brake disc pack (36) of at least one landing gear (18) to create an oxygen reduced atmosphere at the at least one brake disc pack (36).

2. Inert gas system according to claim 1, wherein the at least on brake disc pack (36) comprises a number of brake discs (38, 40, 42, 44) made from carbon fibre or comprising carbon fibre material.

3. Inert gas system according to claim 1, wherein the at least brake disc pack (36) comprises a stationarily mounted brake saddle (46).

4. Inert gas system according to claim 2, wherein said brake discs (38, 40, 42, 44) are movable laterally (48).

5. Inert gas system according to claim 2, wherein the brake discs (38, 40, 42, 44) are movable laterally by means of a piston arrangement (34).

6. Inert gas system according to claim 5, wherein said piston arrangement (34) is being actuated electrically or hydraulically.

7. Inert gas system according to claim 2, wherein in the non-activated stage of the brake disc (38, 40, 42, 44) annular spaces (60) are formed between adjacently mounted brake discs (38, 40, 42, 44).

8. Inert gas system according to claim 1, wherein in the at least one inert gas reservoir (34) an oxygen-depleted gas or oxygen-depleted air or an inert gas is provided for supplying an gaseous medium to the inert gas pipe system (24).

9. Inert gas system according to claim 1, wherein a valve (74) is assigned to a flow path (64, 62, 68, 72) of the inert gas.

10. Inert gas system according to claim 1, wherein said piping system (26, 28) comprises an inert gas supply (72), supplies inert gas to vertical pipe (26) arranged within said landing gear (18).

11. Inert gas system according to claim 1, wherein said piping system (26, 28) includes a horizontally extending pipe section (28) within a hollow interior (76) of an axle (32) of said at least one landing gear (18).

12. Inert gas system according to claim 9, wherein said flow path (64, 62, 68, 72) of inert gas comprises a bypass (66), bypassing said valve (74).

13. Inert gas system according to claim 7, wherein said axle (32) includes a number of openings (52) assigned to said annular spaces (60) between said brake discs (38, 40, 42, 44).

14. Inert gas system according to claim 1, wherein an inert gas flow (54) from said openings (52) into said annular spaces (60) is directed towards surfaces (56, 58), respectively, of said brake discs (38, 40, 42, 44).

15. Inert gas system according to claim 12, wherein said bypass (66) comprises a throttle element (70).

16. Inert gas system according to claim 12, wherein said bypass (66) extends from an inert gas supply line (62) so said supply (72) of the brake disc pack (36).

17. Inert gas system according to claim 1, wherein inert gas is fed by the at least one vertical pipe (26) to the hollow interior (76) of the axle (32) directly.

18. Inert gas system according to one more of the proceeding claims wherein a horizontally extending pipe (28) or the axle (32) itself comprises openings (52) on the circumference to direct an inert gas flow (54) between the piston arrangement (34) and the first brake disc (38) and/or between the surface of this brake saddle (46) and the second surface (58) of the fourth brake disc (44).

## Amended claims

### Amended claims in accordance with Rule 137(2) EPC.

**1.** Braking system, particularly for aircrafts (10), having at least one inert gas reservoir (64) providing an oxygen-depleted gas wherein said oxygen-depleted gas is fed to at least one brake disc pack (36) of break disc mounted at least one landing gear (18) and an inert gas system (24) having at least one inert gas reservoir (64) providing an oxygen depleted gas and means to feed said oxygen depleted gas to the at least one break disc pack (36) of the at least one landing gear (18) to create an oxygen reduced atmosphere at the at least one brake disc pack (36).

**2.** Braking system according to claim 1, wherein the at least on brake disc pack (36) comprises a number of brake discs (38, 40, 42, 44) made from carbon fibre or comprising carbon fibre material.

**3.** Braking system according to claim 1, wherein the at least brake disc pack (36) comprises a stationarily mounted brake saddle (46).

**4.** Braking system according to claim 2, wherein said brake discs (38, 40, 42, 44) are movable laterally (48).

**5.** Braking system according to claim 2, wherein the brake discs (38, 40, 42, 44) are movable laterally by means of a piston arrangement (34).

**6.** Braking system according to claim 5, wherein said piston arrangement (34) is being actuated electrically or hydraulically.

**7.** Braking system according to claim 2, wherein in the non-activated stage of the brake disc (38, 40, 42, 44) annular spaces (60) are formed between adjacently mounted brake discs (38, 40, 42, 44).

**8.** Braking system according to claim 1, wherein in the at least one inert gas reservoir (34) an oxygen-depleted gas or oxygen-depleted air or an inert gas is provided for supplying an gaseous medium to the inert gas pipe system (24).

**9.** Braking system according to claim 1, wherein a valve (74) is assigned to a flow path (64, 62, 68, 72) of the inert gas.

**10.** Braking system according to claim 1, wherein said piping system (26, 28) comprises an inert gas supply (72), supplies inert gas to vertical pipe (26) arranged within said landing gear (18).

**11.** Braking system according to claim 1, wherein said piping system (26, 28) includes a horizontally extending pipe section (28) within a hollow interior (76) of an axle (32) of said at least one landing gear (18).

**12.** Braking system according to claim 9, wherein said flow path (64, 62, 68, 72) of inert gas comprises a bypass (66), bypassing said valve (74).

**13.** Braking system according to claim 7, wherein said axle (32) includes a number of openings (52) assigned to said annular spaces (60) between said brake discs (38, 40, 42, 44).

**14.** Braking system according to claim 1, wherein an inert gas flow (54) from said openings (52) into said annular spaces (60) is directed towards surfaces (56, 58), respectively, of said brake discs (38, 40, 42, 44).

**15.** Braking system according to claim 12, wherein said bypass (66) comprises a throttle element (70).

**16.** Braking system according to claim 12, wherein said bypass (66) extends from an inert gas supply line (62) so said supply (72) of the brake disc pack (36).

**17.** Braking system according to claim 1, wherein inert gas is fed by the at least one vertical pipe (26) to the hollow interior (76) of the axle (32) directly.

**18.** Braking system according to one more of the proceeding claims wherein a horizontally extending pipe (28) or the axle (32) itself comprises openings (52) on the circumference to direct an inert gas flow (54) between the piston arrangement (34) and the first brake disc (38) and/or between the surface of this brake saddle (46) and the second surface (58) of the fourth brake disc (44).
